(19) **Europäisches Patentamt**

**European Patent Office**

**Office européen des brevets**

(11) Veröffentlichungsnummer: **0 635 955 A2**

(12) **EUROPÄISCHE PATENTANMELDUNG**

(21) Anmeldenummer: **94109389.0**

(22) Anmeldetag: **17.06.94**

(51) Int. Cl.⁶: **H04L 7/02**

(30) Priorität: **16.07.93 DE 4323888**

(43) Veröffentlichungstag der Anmeldung:
**25.01.95 Patentblatt 95/04**

(84) Benannte Vertragsstaaten:
**FR GB IT**

(71) Anmelder: **ANT Nachrichtentechnik GmbH**
**Gerberstrasse 33**
**D-71522 Backnang (DE)**

(72) Erfinder: **Auer, Erich, Dr.**
**Kreuzäckerstrasse 9**
**D-74354 Besigheim (DE)**

(54) **Verfahren zur Taktrückgewinnung und Synchronisation.**

㊙ Die Erfindung beschreibt ein Verfahren zur Taktrückgewinnung und Synchronisation sowohl für codirektionale als auch für contradirektionale Schnittstellen.
Nach Abtastung der Eingangssignale mit einer höheren Frequenz wird der jeweilige Beginn der Eingangsimpulse festgestellt und die Mitte der Eingangsimpulse aus der Abtastung mit Hilfe von Zählern und Speichern ermittelt und festgehalten.

**Fig.2**

**b)**

$IDI = k \cdot T$    „1"     $IDI = 6T$     „0"     „0"

**Fig.2**

**g)**

ICF

EP 0 635 955 A2

Die vorliegende Erfindung befaßt sich mit Verfahren zur Taktrückgewinnung und Synchronisation.

Bei Verfahren und Schaltungen, die wahlweise eine große Anzahl von Datenraten ermöglichen sollen sind herkömmliche Arten der Taktrückgewinnung, wie z.B. PLL-Schleifen unbrauchbar.

Aufgabe der vorliegenden Erfindung ist es, Verfahren zur Taktrückgewinnung und Synchronisation anzugeben, die es ermöglichen, bei großer Anzahl von wählbaren Datenraten sowohl für sogenannte codirektionale als auch contradirektionale Schnittstellen (CCITT-Empfehlung G.703), eine Schaltung mit einfacher Umschaltung der Funktion zu ermöglichen.

Die Lösung dieser Aufgabe wird in den Ansprüchen beschrieben. Vorteilhafte Ausführungen ergeben sich durch die Unteransprüche.

Anhand der Figuren soll jetzt die Erfindung näher erläutert werden:

Fig. 1 zeigt den Verlauf des Empfangssignales für eine codirektionale Schnittstelle.

Fig. 2 zeigt den Verlauf des Empfangssignales für eine contradirektionale Schnittstelle.

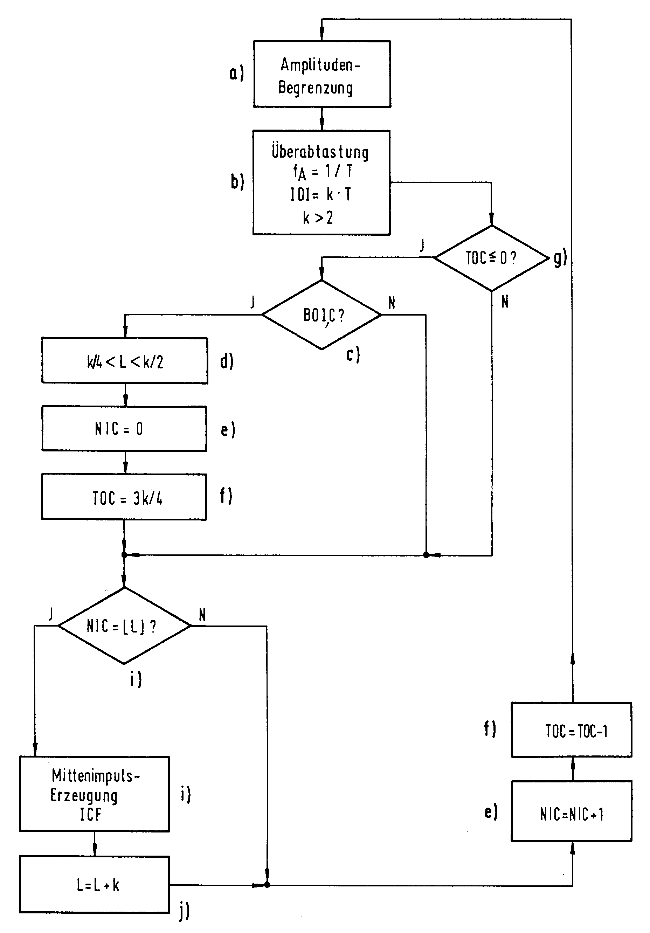

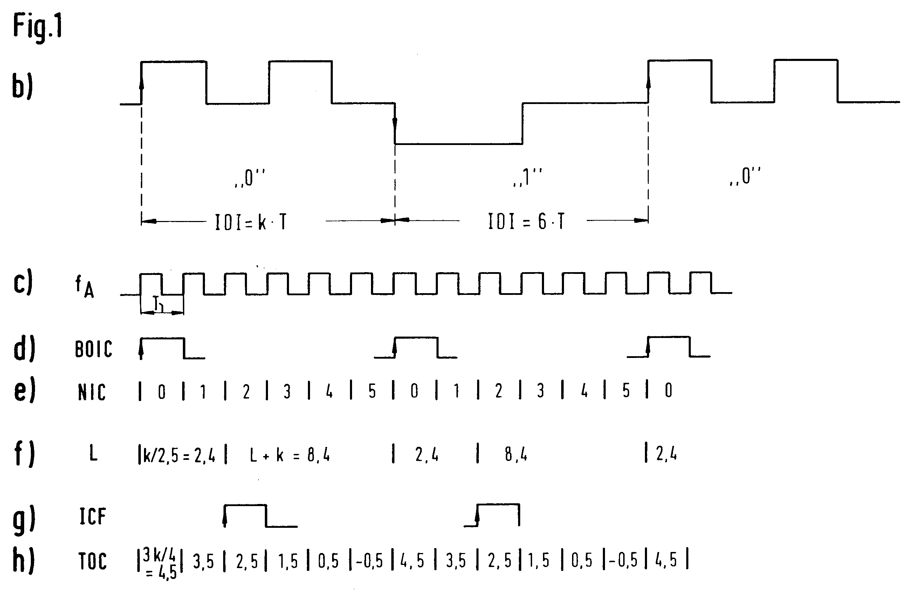

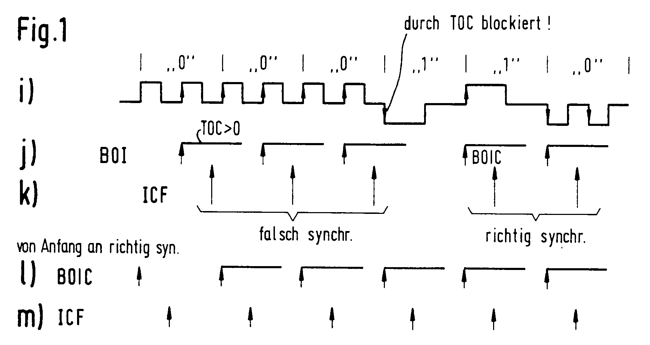

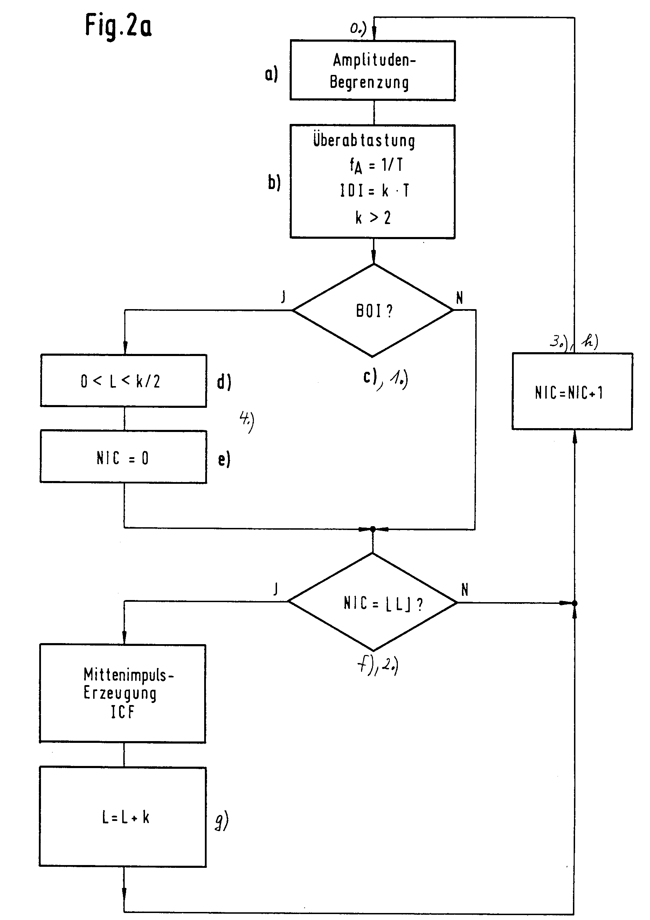

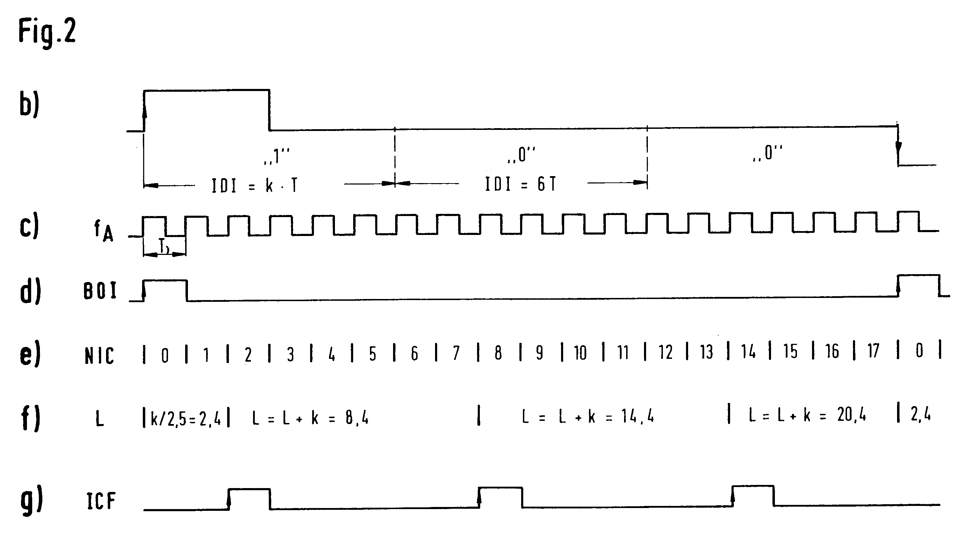

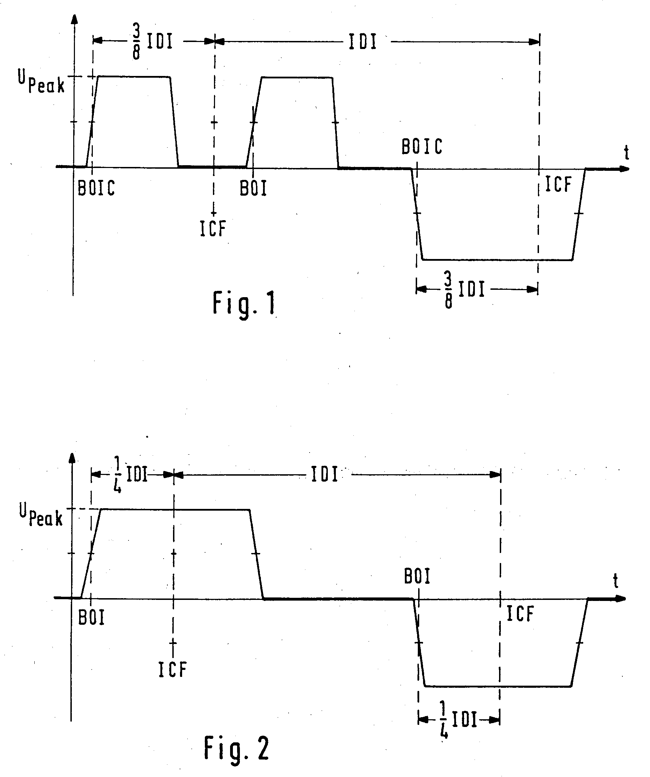

Die Figur 1a zeigt ein Flußdiagramm für das Verfahren für die codirektionale Schnittstelle, und die übereinander aufgelisteten Figuren 1b bis 1h geben Impulsdiagramme wieder für ein Ausführungsbeispiel. Die Figuren 1i bis 1k zeigen Impulsdiagramme für ein anderes Beispiel, bei dem das Verfahren nach einer falschen Synchronisation (beispielsweise durch einen Start verursacht) sich spätestens nach der ersten übertragenen "1" selbst synchronisiert, wieder, und in den Figuren 1l bis 1m ist für das selbe Beispiel eine von Anfang an richtige Synchronisation angenommen.

In entsprechender Weise gibt die Figur 2a ein Flußdiagramm für das erfindungsgemäße Verfahren für eine contradirektionale Schnittstelle wieder, und in den Figuren 2b bis 2g sind Impulsdiagramme für ein Ausführungsbeispiel übereinander gezeichnet.

Dabei bedeuten

$U_{p(eak)}$ = Spitzenspannung

BOI = Beginn eines Impulses (Begin of Impulse)

BOIC = Beginn eines Impulses nach Korrektur (Beginn of Impulse with Correction)

IDI = Impulsabstand (Impulse Distance Increment)

ICF = Impulsmitte (Impulse Center Found)

Der Ablauf des erfindungsgemäßen Verfahrens bei Verwendung einer codirektionalen Schnittstelle (Patentanspruch 1) ist folgender.

Prinzipieller Ablauf:

1) Die Eingangsignale (Fig. 1) werden abgetastet, und aus den Abtastwerten wird das Signal gewonnen, das den Beginn BOIC eines Impulses anzeigt.

2) Veranlaßt durch dieses BOIC-Signal, wird in einen Speicher L ein Wert von größer 1/4 und kleiner 1/2, also z.B. 3/8 • der Periode IDI = k•T des Empfangssignals bezogen auf die Periode T des Abtastsignals, also (3/8)k geladen.

3) Durch das BOIC-Signal wird ein freilaufender Zähler auf den Wert 0 zurückgesetzt. Danach zählt dieser Zähler NIC freilaufend hoch mit der Periode des Abtastsignals.

4) Durch das BOIC-Signal wird weiter ein anderer freilaufender Zähler TOC mit dem ganzzahligen Wert von 3/4 der Periode IDI des Empfangssignals bezogen auf die Periode T des Abtastsignals, also mit (3/4)k, vorbesetzt. Danach zählt dieser Zähler TOC freilaufend herunter mit der Periode T des Abtastsignals.

Erst wenn der Zähler TOC den Zählerstand 0 erreicht hat, wird ein BOIC-Signal freigegeben, wenn es zu dem Zeitpunkt auftritt.

Der Zähler TOC bleibt dann bis zum nächsten BOIC-Signal im Zustand 0.

5) In dem Vergleicher NICC wird laufend ein Vergleich gemacht zwischen dem Zählerstand des freilaufenden Zählers NIC und dem ganzzahligen Anteil des Inhalts des Speichers L. Ergibt sich derselbe Stand, so wird zu diesem Zeitpunkt ICF ein Impuls erzeugt, dessen Flanke sich im mittleren Bereich eines Signalimpulses befindet und deshalb zur Abtastung geeignet ist.

6) Der Addierer ADD addiert zum aktuellen Inhalt des Speichers L den Wert der Periode IDI des Eingangssignals bezogen auf die Periode T des Abtastsignals hinzu und stellt dieses Ergebnis über den Multiplexer MUX dem Speicher L zum Einschreiben zur Verfügung.

7) Das ICF-Signal wird zur Synchronisation des BIT-Taktes verwendet.

8) Das ICF-Signal steuert weiter die Übertragung des Eingangs-Signals an den Ausgang.

9) Das ICF-Signal steuert darüber hinaus die Abtastung eines NSC-Signals, das angibt, ob eine Verletzung der Vorzeichen-Regel vorliegt oder nicht. Dieses Signal wird zur Synchronisation des BYTE-Taktes verwendet.

10) Als viertes veranlaßt das ICF-Signal das Einschreiben des anstehenden Additionsergebnisses in den Speicher L.

11) Der gesamte Vorgang setzt sich periodisch entweder am Punkt 2) fort, falls ein BOIC-Signal auftritt, oder aber am Punkt 5), falls kein solches Signal auftritt, sondern lediglich ein ICF-Impuls.

Der Anspruch 1 ist als Ausführungsbeispiel im Flußdiagramm der Figur 1a niedergelegt. Die einzelnen Verfahrensschritte lauten a.) Amplitudenbegrenzung

b.) Überabtastung $f_A$ = 1/T Periodenverhältnis IDI

= k • T mit k > 2. Danach kommt die Abfrage g.), ob der weitere Impulszähler TOC ≤ 0 ist, im Neinfall geht es weiter zu Schritt i.), im Jafall geht es zu Schritt c.), nämlich die Abfrage, ob der Beginn eines Impulses BOI,C ? erfolgt, im Neinfall geht es ebenfalls nach Schritt i.). Im Jafall wird der Speicher L mit einer Größe besetzt zwischen k/4 und k/2. Nach diesem Verfahrensschritt d.) erfolgt e.), nämlich der Impulszähler NIC wird auf 0 gesetzt und der weitere Impulszähler TOC wird auf 3k/4 gesetzt (Verfahrensschritt f.)). Danach kommt Verfahrensschritt i.), nämlich die Abfrage, ob der Inhalt des Impulszählers NIC gleich dem ganzzahligen Wert des Speichers L ist; im Neinfall geht es zu Schritt k.) weiter, im Jafall wird der Mittenimpuls ICF erzeugt und der Speicherinhalt um k vergrößert (Verfahrensschritt j.)). Anschließend erfolgt Verfahrensschritt k.), wobei der Inhalt des Zählers NIC um 1 erhöht wird und der Inhalt des weiteren Impulszählers um 1 erniedrigt wird. Der Zyklus ist beendet und wird mit dem nächsten Takt des Abtastsignals erneut durchlaufen.

Die Figuren 1b bis 1h zeigen Impulsdiagramme für ein Ausführungsbeispiel, wobei k = 6 gewählt wurde und das Empfangssignal die Folge 010 (Figur 1b) aufweist. In Figur 1c ist das Abtastsignal $f_A$ gezeichnet und in Figur 1d der Beginn eines Impulses BOIC erkennbar. Die Figur 1i zeigt den Inhalt des Zählers NIC und die Figur 1f den Inhalt des Speichers L, wobei dieser mit dem Anfangswert k/2,5 gleich 6÷2, 5 = 2,4 besetzt wird. Der Zähler NIC zählt von 0 bis 5, um dann beim zweiten BOIC-Impuls wieder von vorne von 0 anzufangen. Der Speicher L enthält für 2 Schritte des Zählers NIC den Wert 2,4, dann wird im dritten Schritt Gleichheit erkannt, d.h. der Inhalt des Zählers NIC ist gleich 2 und damit gleich der ganzen Zahl im Speicher L. Damit wird ein Synchronimpuls ICF (Figur 1g) erzeugt. In Figur 1h sind die einzelnen Zählerstände des weiteren Impulszählers TOC ersichtlich. Zunächst wird er auf 3k/4 = 4,5 geladen und zählt mit jedem Takt um 1 herab. Mit dem Zähler TOC wird verhindert, daß der weitere Beginn eines Impulses mit Beginn des 4. Taktes erkannt und verwertet wird, welcher die Synchronität jedoch stören würde; die Sperre durch TOC wird erst aufgehoben, wenn sein Inhalt unter 0 sinkt, das ist zu Anfang des 6. Taktes der Fall. Damit wird der ordentliche Beginn eines Impulses BOIC mit Beginn des 7. Taktes zugelassen.

Um die Strategie der Sperre mittels des weiteren Impulszählers TOC noch besser zu veranschaulichen, wird der Fall einer zunächst falschen Synchronisation in den Figuren 1i bis 1k wiedergegeben. Die Figur 1i zeigt eine 000110-Folge des Empfangssignals. Das Verfahren möge laut Figur 1j durch den unrechtmäßigen 2. Beginn eines Impulses BOI in der Mitte der ersten 0 gestartet werden.

Mit ihm wird der weitere Impulszähler TOC für eine Zeit von etwa 5 Takten auf den Wert > 0 gesetzt, wodurch er die Erkennung des an sich richtigen nächsten Beginns eines Impulses am Anfang der zweiten 0 verhindert. Es werden dadurch falsche Synchronimpulse ICF hervorgerufen. Nach der ersten 1 der Eingangsimpulsfolge wird aber richtig synchronisiert, da nun der erste Beginn eines positiven Impulse der zweiten 1 als korrigierter BOIC erkannt wird. Von da an wird richtig synchronisiert, und der weitere Impulszähler TOC verhindert jeweils ein Einrasten auf einen zweiten Beginn eines Impulses innerhalb folgender Nullen.

Die Figuren 1l und 1m zeigen den Fall der Figuren 1i bis 1k mit einer von Anfang an richtigen Synchronisation.

Der Ablauf des erfindungsgemäßen Verfahrens bei Verwendung einer contradirektionalen Schnittstelle (Patentanspruch 2) ist folgender:

1.) Die Eingangssignale (Fig. 2) werden abgetastet und aus den Abtastwerten wird das Signal gewonnen, das den Beginn BOI eines Impulses anzeigt.

2.) Veranlaßt durch dieses BOI-Signal, wird in einen Speicher L ein Wert geladen, der größer als 0 und kleiner als 1/2 der Periode IDI = k • T des Empfangssignals bezogen auf die Periode T des Abtastsignals ist, also mit größer 0 und kleiner k/2.

3.) Durch das BOI-Signal wird ein freilaufender Zähler NIC (Next Impulse Counter) auf den Wert 0 zurückgesetzt. Danach zählt dieser Zähler NIC freilaufend hoch die Anzahl der Perioden T des Abtastsignals.

4.) In dem Vergleicher NICC(omparator) wird laufend ein Vergleich gemacht zwischen dem Zählerstand des freilaufenden Zählers NIC und dem ganzzahligen Anteil des Speichers L. Ergibt sich derselbe Stand, so wird ein Impuls erzeugt, der die Mitte ICF eines Signalimpulses darstellt.

5.) Der Addierer ADD addiert zum aktuellen Inhalt des Speichers L den Wert der Periode IDI bezogen auf die Periode T des Abtastsignals des Eingangssignals hinzu und stellt dieses Ergebnis über einen Multiplexer MUX dem Speicher L zum Einschreiben zur Verfügung.

6.) Das ICF-Signal wird zur Synchronisation des BIT-Taktes verwendet.

7.) Das ICF-Signal steuert weiter die Übertragung des Eingangs-Signals an den Ausgang.

8.) Zusätzlich veranlaßt das ICF-Signal das Einschreiben des anstehenden Additionsergebnisses in den Speicher L.

9.) Der gesamte Vorgang setzt sich periodisch entweder am Punkt 2.) fort, falls ein BOI-Signal auftritt, oder aber am Punkt 4.), falls kein solches Signal auftritt, sondern lediglich ein ICF-Impuls.

In der Figur 2a ist das zu Patentanspruch 2 bzw. 3 gehörige Flußdiagramm gezeichnet. Mit dem Verfahrensschritt 0.) bzw. a.) Amplitudenbegrenzung wird der Zyklus gestartet, es folgt der Schritt b.) Überabtastung mit dem Abtastsignal $f_A$ = 1/T, wobei die Periode des Empfangssignals IDI = k • T ist, wobei das Periodenverhältnis k > 2 gefordert ist. Eine in den meisten Fällen genügende große Auflösung erhält man ab den Werten k = 5. Es folgt der Schritt c.) bzw. 1.), nämlich die Abfrage ob der Beginn eines Impulses BOI erfolgt ist; im Neinfall geht es weiter mit Schritt f.) bzw. 2.), das ist die Abfrage des Inhaltes des Zählers NIC auf Gleichheit mit dem ganzzahligen Wert des Speichers L. Im Jafall wird ein Mittenimpuls ICF erzeugt und der Speicherinhalt um k vergrößert L = L + k. Danach erfolgt ebenso wie auch im Nichtübereinstimmungsfall der Schritt h.) bzw. 3.), es wird der Zählerinhalt um 1 erhöht NIC = NIC + 1. Anschließend erfolgt, mit dem nächsten Takt des Abtastsignals die Wiederholung der Schleife mit Start bei Schritt a.) bzw. 0.). Bleibt noch zu ergänzen: Zu Beginn eines Impulses BOI wird der Speicher mit einem Wert zwischen 0 und k/2 besetzt sowie der Zählerinhalt auf 0 gesetzt NIC = 0, das sind die Schritte b.) und e.) bzw. 4.) anschließend erfolgt der Schritt f.) bzw. 2.).

Die Figur 2a zeigt ein Ausführungsbeispiel für eine mögliche Folge der Verfahrensschritte, selbstverständlich kann der Schritt 3.) bzw. h.) auch vor dem Schritt 2.) bzw. f.) eingefügt werden, und außerdem ist die Reihenfolge der Schritte d.) und e.) bzw. der Schritte g.) und der Mittenimpulserzeugung unerheblich.

Die Figuren 2b bis 2g zeigen ein Ausführungsbeispiel für den Verlauf von Impulsen, Speicherinhalt und Impulszählerinhalt. In Figur 2b ist eine 1001-Folge des Empfangssignals aufgezeichnet. Die Periodendauer IDI ist gleich k • T mit k = 6 gegenüber der Periode T des Abtastsignals $f_A$ (in Figur 2c gezeichnet). Die Figur 2d zeigt zu Beginn der ersten 1 den Beginn eines Impulses BOI sowie zu Beginn der letzten 1. In Figur 2e ist die Folge des Zählerstandes des Impulszählers NIC gezeichnet: er wird mit dem ersten BOI-Impuls auf 0 gesetzt und zählt hoch bis 17, um dann mit dem nächsten BOI-Impuls wiederum auf 0 zurückgesetzt werden. In Figur 2f ist der Speicherinhalt des Speichers L ersichtlich: er wird zu Beginn des ersten BOI auf k/2,5 = 2,4 gesetzt und hält diesen Wert zwei Takte lang. Zu Beginn des dritten Taktes wird Gleichheit zwischen ganzzahligem Wert des Speicherinhaltes und dem Inhalt des Impulszählers, nämlich 2 erkannt und damit ein Synchronimpuls ICF, siehe Figur 2g, hier bei 2/3 des Impulsrückens erzeugt. Weiterhin wird der Speicherinhalt um k erweitert auf 8,4. Hat nun der Zähler NIC den Wert 8 erreicht, erfolgt das gleiche Spiel: es wird ein Abtast- und Synchronimpuls ICF erzeugt, mit dem die erste 0 des Datenempfangssignals sicher erkannt wird. Weiterhin wird der Speicherinhalt um k vergrößert auf 14,4. Erreicht der Impulszähler NIC den Wert 14, so wird wiederum Gleichheit mit dem Speicherinhalt erkannt bezüglich ganzzahligem Wert und ein weiterer Abtastimpuls ICF zur Erkennung der zweiten Null erzeugt. Mit dem nächsten Beginn eines Impulses, nämlich für die letzte 1, wird der Speicher L wiederum auf den Wert 2,4 zurückgesetzt.

Es ist leicht zu erkennen, daß die beiden genannten Verfahren sich nur soweit unterscheiden, daß beide mit einer einzigen Schaltung durchzuführen sind, unter Vornahme nur weniger Umschaltungen. Das bedeutet aber auch, daß Umprogrammierungen zur Bewältigung eines weiten Bereiches von Abtastraten leicht zu bewerkstelligen sind.

## Patentansprüche

1. Verfahren zur Taktrückgewinnung und Synchronisation bei Verwendung einer codirektionalen Schnittstelle mit einem Speicher, einem Impulszähler und einem weiteren Impulszähler, sowie mit folgenden Verfahrensschritten die mit der Periode der Abtastfrequenz durchgeführt werden.

   a) Amplitudenbegrenzung des empfangenen Signals.

   b) Über-Abtastung des begrenzten Signals mit einem Signal, wobei das Verhältnis k der Periode (IDI) des Empfangssignals zur Periode (T) des Abtastsignals groß ist, Sprung nach g),

   c) es wird laufend geprüft, ob ein Signal gewonnen wird, das den Beginn eines Impulses (BOI,C?) anzeigt. Ist letzteres der Fall, so erfolgt Schritt d), sonst Schritt i),

   d) Zu Beginn eines Impulses (BOIC) wird der Speicher (L) mit einem Wert geladen, der größer als 1/4 und kleiner als 1/2 der Periode (IDI = kT) des Empfangssignals bezogen auf die Periode (T) des Abtastsignals ist, also mit größer k/4 und kleiner k/2 (k/4 < L < k/2),

   e) Der Impulszähler (NIC) wird zu Beginn des Impulses auf den Wert 0 gesetzt,

   f) Der weitere Impulszähler (TOC) wird zu Beginn des Impulses auf einen Wert gesetzt, der 3/4 der Periodendauer (IDI) des Empfangssignals bezogen auf die Periode (T) des Abtastsignals, also (3/4) • k, beträgt, Sprung nach i),

   g) Beim Stand ≤ 0 des weiteren Impulszählers (TOC) wird ein Signal für den Beginn eines Empfangsimpulses (BOIC) gegeben, wenn zu dem Zeitpunkt dieser Beginn tatsächlich vorliegt, Sprung nach c), wenn TOC > 0 Sprung nach i),

h) Danach bleibt der weitere Impulszähler (TOC) stehen oder zählt weiter herunter,

i) Der ganzzahlige Inhalt des Speichers (L) wird laufend mit dem Inhalt des Impulszählers (NIC) verglichen (NICC, NIC = $\lfloor L \rfloor$?), bei Übereinstimmung wird ein Impuls (ICF) erzeugt, der als Synchronimpuls für die BIT-Taktfrequenz dient, und es erfolgt Schritt j);

j) Zum Inhalt des Speichers wird eine Periodendauer (IDI) des Eingangssignals bezogen auf die Periode (T) des Abtastsignals addiert (L = L + k), Sprung nach k),

k) Der Impulszähler (NIC) zählt mit der Periode (T) des Abtastsignals weiter (NIC = NIC + 1), der weitere Impulszähler (TOC) zählt mit der Periode (T) des Abtastsignals herunter (TOC = TOC-1), Sprung nach a) (Fig. 1, 1a bis 1m).

2. Verfahren zur Taktrückgewinnung und Synchronisation bei Verwendung einer contradirektionalen Schnittstelle mit einem Speicher und einem Impulszähler, wobei die einzelnen Verfahrensschritte im Takte des Abtastsignals durchgeführt werden:

a) Amplitudenbegrenzung des empfangenen Signals.

b) Über-Abtastung des begrenzten Signals mit einem Signal,. dessen Periode (T) klein ist gegenüber der Periode (IDI) des Empfangssignals, wobei das Verhältnis k der Periode (IDI) des Empfangssignals zur Periode (T) des Abtastsignals größer 2 ist.

c) Gewinnung eines Signals, das den Beginn eines Impulses (BOI) anzeigt, es wird laufend geprüft, ob ein Signal gewonnen wird, das den Beginn eines Impulses (BOI) anzeigt. Ist letzteres der Fall, so wird das Verfahren ab Schritt d) fortgesetzt, im Neinfall Sprung nach f),

d) Zu Beginn eines Impulses (BOI) wird der Speicher (L) mit einem Wert geladen, der größer als 0 und kleiner als 1/2 der Periode (IDI = k•T) des Empfangssignals bezogen auf die Periode des Abtastsignals ist, also mit größer 0 und kleiner k/2(o<L<k/2).

e) Der Impulszähler (NIC) wird zu Beginn des Impulses auf den Wert 0 gesetzt (NIC = 0),

f) Der ganzzahlige Inhalt des Speichers (L) wird laufend mit dem Inhalt des weiterzählenden Impulszählers (NIC) verglichen (NICC, NIC = $\lfloor L \rfloor$?); bei Übereinstimmung wird ein Impuls (ICF) erzeugt, der als Synchronimpuls für die Taktfrequenz dient, und es erfolgt Schritt g), bei Nichtübereinstimmung weiter bei Schritt h);

g) Zum Inhalt des Speichers (L) wird eine Periodendauer (IDI) des Eingangssignals bezogen auf die Periode (T) des Abtastsignals addiert (L = L + k).

h) Der Impulszähler zählt mit der Periode (T) des Abtastsignals weiter (NIC = NIC + 1); danach wiederholt sich der Zyklus mit dem Verfahrensschritt a) (Fig. 2, 2a) bis 2g)).

3. Verfahren zur Taktrückgewinnung und Synchronisation bei Verwendung einer contradirektionalen Schnittstelle mit einem Speicher und einem Impulszähler, wobei das empfangene Signal amplitudenbegrenzt und überabgetastet wird mit einem Abtast-Signal, wobei das Verhältnis (k) der Periode (IDI) des Empfangssignals zur Periode (T) des Abtastsignals groß ist, und wobei ein Signal gewonnen wird, das den Beginn eines Impulses (BOI) anzeigt (Verfahrensschritte 0)) gekennzeichnet durch die ebenfalls mit der Periode (T) des Abtastsignals erfolgenden weiteren Verfahrensschritte:

1.) Abfrage, ob Beginn eines Impulses (BOI?) vorliegt, wenn ja springe nach Schritt 4.),

wenn nein Schritt 2.).

2.) Der ganzzahlige Inhalt des Speichers (L) wird mit dem Inhalt des Impulszählers (NIC) verglichen,

bei Übereinstimmung wird ein Impuls (ICF) erzeugt, der als Synchronimpuls für die BIT-Taktfrequenz dient, und zum Inhalt des Speichers (L) wird eine Periodendauer (IDI) des Eingangssignals, bezogen auf die Periode (T) des Abtastsignals, also der Wert k addiert (L = L + k), Sprung nach Schritt 3.);

bei Nichtübereinstimmung Schritt 3.)

3.) Der Inhalt des Impulszählers (NIC) wird um 1 erhöht (NIC = NIC + 1),

Sprung nach 1.) bzw. 0.),

4.) Zu Beginn des Impulses (BOI) wird der Speicher (L) mit einem Wert geladen, der größer als 0 und kleiner als 1/2 der Periode (IDI = k•T) des Empfangssignals bezogen auf die Periode (T) des Abtastsignals ist, also mit größer 0 und kleiner k/2 (0<L<k/2) ; der Impulszähler (NIC) wird auf den Wert 0 gesetzt (NIC = 0), Sprung nach Schritt 2.) (Fig. 2a).

4. Verfahren nach Anspruch 1, dadurch gekennzeichnet, daß der Speicher mit einem Wert von k•3/8 geladen wird. (Fig. 1)

5. Verfahren nach Anspruch 2 oder 3, dadurch gekennzeichnet, daß der Speicher mit einem Wert von k/4 geladen wird.

# Fig.1

**b)**

„0''    „1''    „0''

$IDI = k \cdot T$    $IDI = 6 \cdot T$

**c)** $f_A$

**d)** BOIC

**e)** NIC | 0 | 1 | 2 | 3 | 4 | 5 | 0 | 1 | 2 | 3 | 4 | 5 | 0

**f)** L    |k/2,5 = 2,4 |    L + k = 8,4    | 2,4 |    8,4    | 2,4

**g)** ICF

**h)** TOC |$\frac{3k/4}{=4,5}$| 3,5 | 2,5 | 1,5 | 0,5 |-0,5 | 4,5 | 3,5 | 2,5 |1,5 | 0,5 |-0,5 | 4,5 |

EP 0 635 955 A2

# Fig.1

durch TOC blockiert !

i)   | ,,0'' | ,,0'' | ,,0'' | ,,1'' | ,,1'' | ,,0'' |

j)   BOI   TOC>0

k)   ICF

falsch synchr.   richtig synchr.

BOIC

von Anfang an richtig syn.

l)   BOIC

m)   ICF

# Fig.2a

# Fig.2

Fig.2 — Signal timing diagram showing rows b), c) $f_A$, d) BOI, e) NIC, f) L, g) ICF

EP 0 635 955 A2

Fig. 1

Fig. 2